# EUROPEAN PATENT APPLICATION

(11) **EP 2 120 368 A2**
(43) Date of publication of application: **18.11.2009**
(21) Application number: 09159567.8
(22) Date of filing: 06.05.2009
(51) Int. Cl.: H04B 7/185

(54) **Method and apparatus for efficient in-flight email messaging.**

(30) Priority: 16.05.2008 US 54002 P; 22.04.2009 US 427806
(71) Applicant: Honeywell International Inc., Morristown, NJ 07962 (US)
(72) Inventor: Khan, Mahmud, Morristown, NJ 07962-2245 (US); Lee, Jang, Morristown, NJ 07962-2245 (US)
(74) Representative: Buckley, Guy Julian

(57) **Abstract**

A method for routing packets from a mobile network is provided. The method includes routing at a router, packets of a first type through a first internet access service over a satellite link. The router also routes packets of a second type through a second internet access service over the satellite link.

## Description

### CROSS-REFERENCE TO RELATED APPLICATIONS

This application claims priority to U.S. Provisional Application No. 61/054,002, "Method and System for In flight BlackBerry Messaging Solution," filed on May 16, 2008, which is hereby incorporated herein by reference.

This application is related to the following co-pending United States patent application which is hereby incorporated herein by reference:

United States patent application serial number 12/427,804 (attorney docket number H0019653-5435 entitled "Apparatus and Method for Modifying Configuration Settings of a Network Device from a Mobile Phone") and filed on even date herewith.

### BACKGROUND

Internet access during a flight on an aircraft can be very costly, because internet access from an aircraft during flight is generally billed based on the length of time in which access to the internet service is granted. Once a session granting internet access to a user is initiated, charges begin accruing. Charges continue to accrue until the user shuts down the session, regardless of whether the bandwidth granted for the session is actually being used by the user. For example, the user may only access local information or the user may sit idle during certain periods of the session. During these periods of idle network traffic from the user, charges are continuing to accrue.

The high cost of in-flight internet access is most noticeable for users of handheld devices such as a Blackberry® device. These users typically only require a small amount of internet bandwidth, and the bandwidth is only used for a fraction of the session during which access is granted. These users, however, are still typically charged based the length of time for their session, regardless of whether they are actually using the internet access granted.

### SUMMARY

A method for routing packets from a mobile network is provided. The method includes routing packets of a first type through a first internet access service at a router. The router also routes packets of a second type through a second internet access service.

### DRAWINGS

Understanding that the drawings depict only exemplary embodiments of the present invention and are not therefore to be considered limiting in scope, the exemplary embodiments will be described with additional specificity and detail through the use of the accompanying drawings, in which:

Figure 1 is a diagram of one embodiment of a system for routing packets from an electronic device to the internet.

Figure 2 is a flow diagram of one embodiment of a method for routing packets from an electronic device to the internet.

In accordance with common practice, the various described features are not drawn to scale but are drawn to emphasize specific features relevant to the exemplary embodiments of the present invention.

### DETAILED DESCRIPTION

The present disclosure is directed towards a method and system for routing information to and from a device based on the type of information being routed. The information to/from the device is routed through one of several different internet access services based on the type of information. For example, in one embodiment, a first type of information is routed through an internet service that charges for access based on the amount of data transferred to/from the device. A second type of information is routed through an internet service that charges based on the amount of time in which access is granted. In one embodiment, the type of information being transferred is identified by a destination or origination point of the information.

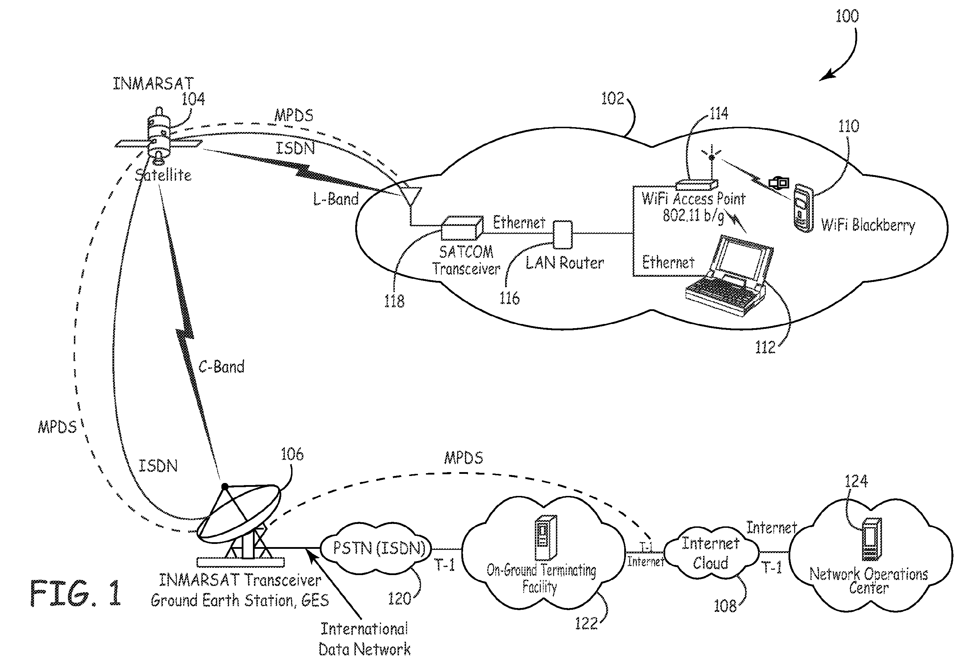

Figure 1 illustrates one example of a system 100 for routing information based on the type of information. In the embodiment shown in Figure 1, system 100 illustrates a mobile network 102 coupled through a satellite 104 and a ground earth station 106 to the internet 108. In the embodiment illustrated in Figure 1, the satellite 104 and ground earth station 106 are part of the INMARSAT system. In other embodiments, satellite 104 and ground earth station 106 are part of other satellite based systems. Mobile network 102 is implemented on a vehicle (not shown) such as an aircraft. Mobile network 102 enables users in the vehicle to access the internet 108.

Mobile network 102 is a local area network (LAN) using TCP/IP communication protocol and can include one or more portable or non-portable electronic devices coupled together with a router, hub, switch or other switching device. In the embodiment, illustrated in Figure 1, mobile network 102 comprises a first electronic device 110, a second electronic device 112, a wireless access point 114, a router 116, and a satellite transceiver 118. In the embodiments described herein, first electronic device 110, second electronic device 112, mobile network 102, the INMARSAT system, and the internet 108 transfer information using the Internet Protocol (IP). Information transmitted using the IP is transferred in data structures known as packets. Thus, the information transferred between devices and networks is herein referred to as packets.

First electronic device 110 is configured as a device that communicates all IP packets through one or more network operations centers 124. Network operations center 124 acts as the interface between first electronic device 110 and the internet 108, email service, and/or other electronic devices. For example, in one embodiment, first electronic device 110 is a Blackberry® device. A Blackberry® device is a device that uses software developed by Research in Motion (RIM) to send and receive data from network operations center 124. For example, in one embodiment, first electronic device 110 is a BlackBerry® 8820 Smartphone. The BlackBerry® 8820 Smartphone is a dual-mode handset, combining EDGE/GPRS/GSM cellular and Wi-Fi connectivity for data access and voice support through unlicensed mobile access (UMA) for fixed-mobile convergence (FMC) service offering from various wireless carriers around the world. The BlackBerry® 8820 smart-phone supports the 802.11 a/b/g Wi-Fi standards to enable data access over Wi-Fi connections, as well as through public hotspots and wireless home networks.

To send and receive packets from network operations center 124, first electronic device 110 initiates an IP tunnel to network operations center 124. All packets sent from first electronic device 110 are initially sent to network operations center 124. Network operations center 124 then routes the packets to the appropriate location. For example, if the packets contain email information, the packets are routed to the appropriate email server, which may be located within network operations center 124. As another example, packets containing general internet information are forwarded from network operations center 124 toward their appropriate destination in the internet 108.

Second electronic device 112 is a device enabling general internet access. General internet access includes internet browsing that enables direct access to substantially all portions of the internet enabled by the internet access provider. In other words, packets from second electronic device 112 do not need to travel through network operations center 124 in their route to the destination, the packets may be directly routed to their destination.

First and second electronic devices 110, 112 communicate with router 116 using the IP. In one embodiment, router 116 is a local area network (LAN) router. In the embodiment shown in Figure 1, first electronic device 110 is a wireless device that communicates with router 116 through wireless access point 114. Thus, packets are sent wirelessly between wireless access point 114 and first electronic device 110, and wireless access point 114 communicates the packets through Ethernet cables to router 116. In other embodiments, wireless access point 114 is integrated into router 116. In one embodiment, wireless access point 114 uses Wi-Fi protocols for wireless transmissions with first electronic device 110. In this embodiment, second electronic device 112 is coupled to router 116 via an Ethernet cable, however, in other embodiments, second electronic device 112 is wirelessly communicatively coupled to router 116 via access point 114.

A plurality of internet access services are provided to connect mobile network 102 to the internet 108. In the embodiment shown in Figure 1, a first internet access service is an Internet Services Digital Network (ISDN) service. The ISDN service is an on-demand circuit mode connection which provides a user access to a dedicated bandwidth to the internet. In other words, the user is granted access to a defined amount of bandwidth (e.g. 64 kbps). Once established, the ISDN connection may be shared with other users connected to mobile network 102. The ISDN service fees are based on the length of time for which the user(s) maintain the ISDN circuit as open or active, regardless of whether the ISDN circuit link bandwidth is actually being used. In one embodiment, the IDS service provides connection to one or more of the ISDN circuit channels that are dedicated to the vehicle from which the ISDN service is being provided.

A second internet access service is the mobile packet data service (MPDS). The MPDS provides a user access to an always available Point-to-Point Protocol (PPP), Transport Control Protocol (TCP)/Internet Protocol (IP) based communication link that is shared between multiple mobile networks. In other words, multiple users on different mobile networks (and/or different vehicles) may be connected to the internet using the same MPDS communication link and sharing the same bandwidth. The MPDS internet access is charged based only on the amount of data transferred to/from a device to which the access is granted, regardless of the length of time that a user of the device may access the link.

In the embodiment shown in Figure 1, the internet access services are provided through the INMARSAT system. The INMARSAT system is a satellite based connection from a mobile network to a ground based network. The INMARSAT system in Figure 1 comprises satellite 104 and ground earth station 106. Router 116 routes packets from first and second electronic devices 110, 112 through either the first internet access service or the second internet access service of INMARSAT system. When a packet is received at router 116, router 116 determines which of the internet access services the packet belongs to and sends the packet through the INMARSAT system over the selected internet access service.

For example, in one embodiment, the INMARSAT system provides a particular aeronautical data communication services set, for the full range of commercial and business and general aviation class of aircraft, called the Swift64 High Speed Data (HSD) services. The ISDN service provided by the INMARSAT system is an on-demand 64Kbps Euro ISDN circuit mode service. The MPDS provided by the INMARSAT system is a shared 64Kbps Mobile Packet Data Services (MPDS) service connection.

Packets are transferred between mobile network 102 and the INMARSAT system with transceiver 118. Although the INMARSAT system is described in this embodiment, in other embodiments other satellite networks can be used. Transceiver 118 transmits and receives packets to/from the INMARSAT system via an antenna. Transceiver 118 sends information over the appropriate internet access service of the INMARSAT system to the internet. In one embodiment, transmissions between transceiver 118 and satellite 104 occur over the L-Band of frequencies. In the upstream direction (from mobile network 102 to the internet 108) router 116 determines which channel of the INMARSAT system the packet is to be sent through. Router 116 then forwards the packet to transceiver 118, which transmits the packet through the INMARSAT system on the appropriate channel. A routing table within router 116 determines the type of INMARSAT internet access service over which the packet is to be sent. Router 116 then forwards the packet to transceiver 118, which transmits the packet through the INMARSAT system on the appropriate service channel.

In the upstream path of the INMARSAT system, satellite 104 receives packets from transceiver 118 and forwards the packets to ground earth station 106. In one embodiment, transmissions between satellite 104 and ground earth station 106 occur on the C-Band of frequencies. Ground earth station 106 then sends the packets to the internet 108. Through the INMARSAT system, packets on both the ISDN service and MPDS travel through the same devices (satellite 104 and ground earth station 106); however, they travel on different service channels of the INMARSAT system. Between ground earth station 106 and the internet 108, however, packets on the ISDN internet access travel through different devices than packets on the MPDS. For MPDS service, ground earth station 106 is coupled directly to the internet 108. For ISDN service, packets travel from transceiver 106 through the international data network, over a public switched telephone network (PSTN) 120, and to an on ground terminal 122 (such as the Honeywell On-Ground high speed data (HSD) terminating facility). On-ground terminal 122 then connects the packets to the internet 108. Once each packet reaches the internet 108, the packet is routed through the internet 108 toward its destination.

In the downstream path (from the internet 108 to mobile network 102) packets are similarly routed through either the ISDN internet access service or the MPDS internet access service. Packets on the ISDN service are sent through ground terminal 122 and PSTN 120 to ground earth station 106. Packets on the MPDS are sent directly from the internet 108 to ground earth station 106. Ground earth station 106 then sends all packets received to satellite 104 on their respective service channels. Packets having a destination of a device connected using the ISDN service are sent on the appropriate channel or channels allocated to the ISDN service in the INMARSAT system. Likewise, packets having a destination of a device connected using the MPDS are sent on the service channel of the INMARSAT system allocated to the MPDS. Accordingly, packets are received at satellite 104 from ground earth station 106 and are forwarded to transceiver 118. Transceiver 118 sends the packets to router 116 and router 116 routes the packets either directly to or through wireless access point 114 to their destination device (first or second electronic device 110, 112).

As mentioned above, in this embodiment, first electronic device 110 is configured as a device that communicates all packets through one or more network operations centers 124. Here, all packets from first electronic device 110 are sent to and received from network operations center 124 which is coupled to the internet 108. Thus, all packets sent from first electronic device 110 are sent through the INMARSAT system through the internet 108 and to network operations center 124.

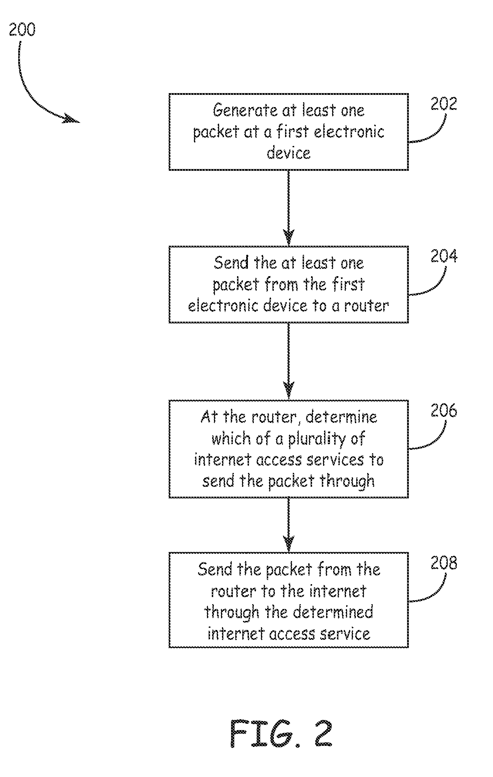

Referring now to Figure 2, one embodiment of a method 200 of routing packets between the internet and a plurality of electronic devices is provided. Method 200 illustrates an upstream communication flow from first electronic device 110 to network operations center 124. Downstream communications, from network operations center 124 to first electronic device 110, occur in substantially the opposite manner.

The upstream communication originates at first electronic device 110. A user of first electronic device 110 causes first electronic device 110 to generate packets of information for network operations center 124 (block 202). The packets of information may contain, for example, information relating to an email that is being sent by the user. The packets are sent from first electronic device 110 to router 116 (block 204). In this embodiment, wireless node 114 is coupled between router 116 and first electronic device 110 to enable wireless transmission for first electronic device 110. Thus, to send packets to router 116, packets are received wirelessly at wireless node 114, and wireless node 114 forwards the packet to router 116. Router 116 has the option to send any packets received through either the MPDS internet access service or the ISDN internet access service.

Once router 116 has received the packets from wireless access point 114, router 116 determines which internet access service to send the packets through (block 206). In one embodiment, router 116 determines which internet service access to send a packet through based on the type of information that is contained within the packet. Information of a first type is routed through a first internet service and information of a second type is routed through a second internet service. For example, packets containing information from a device configured as a device that communicates all packets through one or more network operations centers are sent through the MPDS service and packets containing information from a device configured as a general internet access device are sent through the ISDN service.

In one embodiment, router 116 determines which packets are packets from a device configured as a device that communicates all packets through one or more network operations centers based on a destination of the packets. Packets from such a device are initially sent to one of a plurality of known locations (network operation centers) corresponding to the device. In this embodiment, packets from first electronic device 110 are sent to network operations center 124.

As an example, all packets sent using a Blackberry® system are sent to a Blackberry® enterprise server (sometimes referred to as the network operating center) before being forwarded on to other locations. Router 116, therefore, determines whether a packet is sent using a Blackberry® system by determining whether the packet has an initial destination of a Blackberry® enterprise server (BES) or a Blackberry® Internet server (BIS) (network operations center). If the packet has an initial destination of a BES or a BIS the packet is routed over the MPDS internet access service. Router 116 recognizes that a packet has an initial destination of a BES or a BIS based on the destination IP address of the packet. If the destination IP address for the packet is a BES or a BIS, the router 116 sends the packet over the channel of the INMARSAT system allocated to the MPDS.

In one embodiment, router 116 also determines whether packets are sent through the ISDN internet access based on whether the packets have an initial destination of a BES or a BIS. Namely, in one embodiment, if a packet does not have an initial destination of a BES or a BIS, the packet was not sent using a Blackberry® system and is routed through the ISDN internet access service.

Once router 116 determines which internet access service to send packets over, router 116 sends the packets to transceiver 118 for transmission through the INMARSAT system and to internet 108 (block 208). In this way, packets from first electronic device 110 using a Blackberry® system are routed through the MPDS internet access service and packets from second electronic device 112 using a system other than the Blackberry® system are routed through the ISDN internet access service. Thus, in this embodiment packets are also routed based on the type of device from which the packets are sent. Packets from a device configured as a device that communicates all packets through one or more network operations centers are sent over the MPDS and packets from a device configured as a general internet device are sent over the ISDN service.

Since router 116 dynamically determines which service each packet is to be sent through, router 116 enables two separate devices to be connected to the internet 108 concurrently through a single router 116 while having the packets from each device sent through distinct internet access services.

Router 116 determines the internet access service dynamically, such that each packet or group of packets is determined individually. In one embodiment, the criteria used by router 116 to determine which internet access service a packet is sent through is set up in advance of establishing the network for router 116. For example, in one embodiment a routing table within router 116 is set such that information having a first destination is sent over a first channel of the INMARSAT system and all other information is sent over other channels of the INMARSAT system. The routing table is explicit such that all packets of the first type are sent over the first internet access service and all packets of the second type are sent over the second internet access service. This enables the users the option to use their Laptop PCs to connect to and browse the Internet via the higher speed circuit mode ISDN connection, while simultaneously enabling users of first mobile device 110 to receive their information via the lower cost, shared MPDS link.

In another embodiment, packets comprising information related to voice over IP (VoIP) are routed through a different internet access service than packets containing other information. VoIP typically works well with a steady bandwidth. Thus, in one embodiment, packets containing VoIP information are sent by router 116 over an internet access service that provides the VoIP service with a dedicated bandwidth and packets containing other information are sent by router 116 over another internet access service. Router 116 determines which packets contain VoIP based on a destination of packets that contain VoIP information. For example, in one embodiment, all packets sent using a certain VoIP service (e.g. Vonage) are sent to a particular VoIP server for that service. Thus, router 116 determines which packets are VoIP packets based on whether the packets have a destination address of the VoIP server. In one embodiment, first electronic device 110 is configured as a VoIP mobile phone. Thus, all packets from first electronic device 110 are sent over the internet access service assigned for the VoIP packets.

All or some portions of the method 200 described above can be implemented in software instructions tangibly embodied on a computer readable medium and executed by a processing unit such as a processing unit with router 116. For example, in one embodiment, software instructions to implement all or some portions of method 200 are implemented as code on a memory within router 116. Such computer readable media can be any available media that can be accessed by a general purpose or special purpose computer or processor, or any programmable logic device. Suitable computer readable media may include storage or memory media such as magnetic or optical media, e.g., DVD or CD-ROM, volatile or nonvolatile media such as RAM (e.g., SDRAM, DDR SDRAM, RDRAM, SRAM, etc.), ROM, EEPROM, flash memory, etc.

Although specific embodiments have been illustrated and described herein, it will be appreciated by those of ordinary skill in the art that any arrangement, which is calculated to achieve the same purpose, may be substituted for the specific embodiment shown. This disclosure is intended to cover any adaptations or variations of the inventions herein. Therefore, it is manifestly intended that the inventions herein be limited only by the claims and the equivalents thereof.

## Claims

1. A method (200) for routing packets from a mobile network (102), the method comprising:
at a router (116), routing packets of a first type through a first internet access service over a satellite link (206, 208); and
at the router (116), routing packets of a second type through a second internet access service over the satellite link (206, 208).

2. The method of claim 1, further comprising:
determining whether the packets are of the first type or the second type based on a destination of the packets (206).

3. The method of claim 1, wherein the first type of packet is a packet from a device (110) configured as a device that communicates all packets through one or more network operations centers (124).

4. The method of claim 3, wherein the second type of packet is a packet from a device (112) configured as a general internet browsing device.

5. The method of claim 1, wherein the first type of packet is a packet having a first destination, the method further comprising:
setting a routing table such that packets having the first destination are sent over the first internet access service and all other packets are sent over the second internet access service.

6. A system (102) for routing information based on a type of data, the system comprising:
a transceiver (118) configured to transmit signals to and receive signals from the internet (108) via a satellite (104); and
a router (106) coupled to the transceiver (118) and configured to:
transfer packets between a plurality of electronic devices (110, 112) and the internet (108);
route packets from a first electronic device (110) of the plurality of electronic devices over a first internet access service; and
route packets from a second electronic device (112) of the plurality of electronic devices over a second internet access service.

7. The system of claim 6, wherein the first electronic device (110) is a device that communicates all packets through one or more network operations centers (124).

8. The system of claim 6, wherein the router (116) is configured to dynamically route packets through one of the first internet access service and the second internet access service such that the first internet access service and the second internet access service are used concurrently.

9. The system of claim 6, wherein the router (116) is configured to determine whether a packet is sent through the first internet access service or the second internet access service based on a destination of the packet.

10. The system of claim 9, wherein the destination of the packet is identified by an internet protocol address associated with the packet.
